# EUROPÄISCHE PATENTSCHRIFT

(11) **EP 1 396 324 B1**
(45) Veröffentlichungstag und Bekanntmachung des Hinweises auf die Patenterteilung: **03.09.2008**
(21) Anmeldenummer: 03017339.7
(22) Anmeldetag: 31.07.2003
(51) Int. Cl.: B29C 44/04, B29C 44/08, B29C 44/60

(54) **Spritzgussverfahren für, mit Treibmitteln versehene, thermoplastische Werkstoffe**
Method for injection moulding of thermoplastic material with a foaming agent
Procédé pour le moulage par injection de matériaux thermoplastique avec agent moussant

(30) Priorität: 06.08.2002 IT BZ20020032
(43) Veröffentlichungstag der Anmeldung: 10.03.2004
(73) Patentinhaber: T.P.E. Srl, 34147 Trieste (IT)
(72) Erfinder: Schmidbauer, Axel Georg, 39031 Brunico (BZ) (IT); Winhart, Valentino, 39030 Pfalzen (BZ) (IT); Mutschlechner, Klaus, 39031 Brunico (BZ) (IT); Oberparleiter, Konrad, 39030 San Lorenzo (BZ) (IT)
(74) Vertreter: Oberosler, Ludwig

(56) Entgegenhaltungen:
- EP-A- 1 226 918
- US-A- 3 793 415
- US-A- 5 547 621
- US-A- 5 972 257
- US-A- 5 985 191

## Beschreibung

Die Erfindung bezieht sich auf ein Spritzgussverfahren gemäß Anspruch 1.

Aus der EP 1226918 ist ein Verfahren zur Herstellung eines thermoplastischen Spritzgussteiles gemäß dem Oberbegriff des Anspruchs 1 bekannt, wobei ein mit Treibmittel versehener Kunststoff in eine Form gespritzt wird welche während des Einspritzens einen ersten kleineren Formhohlraum aufweist der, nach Erreichen einer Temperatur welche zwischen dem Schmelzpunkt des Kunststoffes und dem Schmelzpunkt plus ca. 30°C bis ca. 60°C liegt, zu einem zweiten größeren Formhohlraum vergrößert wird. Zwecks Erhebung der Temperatur bei welcher die Vergrößerung des Formhohlraumes erfolgt, ist ein Temperatursensor an der Spritzgussform vorgesehen. Das derart hergestellte Spritzgussteil weist eine kompaktere Zellstruktur in einem Bereich auf welche dem ersten Formhohlraum entspricht, während im Bereich welcher der Vergrößerung, des Formhohlraumes entspricht, sich eine weniger kompakte Zellstruktur ausbildet. Dieses Verfahren sieht nicht vor, die Nebenerscheinungen des Freistromspritzens zu beseitigen und die nachträgliche Aufschäumung in den erweiterten Formhohlraum ist nur bei klar definierten Eigenschaften des Werkstoffes und des Treibmittels möglich. ITBZ-A-20000051

Aus der des selben Antragstellers ist bekannt, dass das progressive Ansteigen des Volumens des Formhohlraumes während der Einspritzfase es ermöglicht die Wirkung des Treibmittelzusatzes welcher zusammen mit dem thermoplastischen Werkstoff eingespritzt wird, zu kontrollieren.

Die Praxis hat gezeigt, dass auch dieses bekannte Verfahren nur bei klar definierten Eigenschaften des Werkstoffes und/oder der Treibmittel anwendbar ist, während ursprünglich das Verfahren darauf ausgerichtet war die unerwünschten Nebenerscheinungen der Freistromeinspritzung zu beseitigen, konnte man infolge Auswertung von Proben feststellen, dass es möglich ist durch den Modus und die Veränderung des Ansteigens des Volumens des Formhohlraumes die Homogenität, die Dichte und die Ausbreitung der Schaumstruktur zu beeinflussen. Weiters sehen die vorgenannten Verfahren nicht die Schaffung periphärer aufgeschäumter oder stärker aufgeschäumter Bereiche vor welche geringere Dichte aufweisen oder elastisch verformbar sind.

Die Erfindung stellt sich also die Aufgabe die obgenannten bekannten Verfahren dahin gehend zu verbessern, dass der Grad der Homogenität, der Dichte, der Strukturausbreitung des aufgeschäumten Materials, außer der Anordnung dieses in Bezug auf die, den Gegenstand umhüllende Schicht, oder in Bezug auf Teile mit unterschiedlicher Struktur und Dichte, auch im Falle von problematisch verarbeitbarem Werkstoff, bestimmt werden kann; wobei die Schaffung von vorbestimmten Bereichen mit, in Bezug auf die verbleibenden Bereiche aus kompakterem Werkstoff, geringerer Werkstoffdichte aber homogener Struktur ermöglicht wird.

Dieser Aufgabe wird durch das kennzeichnende Teil des Anspruchs 1 gelöst.

Das erfindungsgemäße Verfahren sieht vor dass, im Falle einer Veränderung des Formvolumens welche den gesamten Querschnitt des in Fertigung stehenden Gegenstandes betrifft, jener Formteil bewegt wird der den Einspritzkanal trägt. Dieser Zustand trifft z.B. bei der Herstellung von Flaschenstöpseln oder von Gegenständen welche über den Großteil oder die gesamte Längserstreckung wesentlich gleich bleibenden Querschnitt aufweisen, zu. Bei progressiver Bewegung des mit Einspritzkanal ausgestatteten Formteiles um erfindungsgemäß stufenweise das Formvolumen zu erhöhen, wird erreicht, dass die progressiv eingespritzte Werkstoffmenge während der Volumenvergrößerung immer jenen Bereich des Volumens besetzt welcher nahe dem Einspritzbereich liegt, ohne dabei den vorher eingespritzten Werkstoff welcher im Begriff ist aufzuschäumen und abzukühlen, direkt dem Einspritzstrahl und somit dem Druck und der Durchmischung auszusetzen. Weiters stört auf diese Weise der Strahl des eingespritzten Werkstoffes nicht die regelmäßige und gleichmäßige Ausbildung der Bläschen im vorher eingespritzten Material welches sich bereits in Aufschäumfase befindet; bei entsprechender Steuerung der Vergrößerung des Formvolumens kann also eine homogene Schaumstruktur bis unmittelbar an die Außenfläche des Gegenstandes erreicht werden, wobei die Möglichkeit gegeben ist die Dichte dieser Struktur und/oder das Eindringen dieser von Innen in die umhüllende Schicht des Werkstückes und/oder in die "Architektur" der Struktur (Ausmaß, Anordnung und Form der Bläschen / Stärke des, die Bläschen einschließenden, Films) zu verändern.

Erfindungsgemäß können in den Spritzgussformen Druck- und/oder Temperatursensoren vorgesehen sein um die Vergrößerung des Volumens des Formhohlraumes entsprechend dieser Parameter zu steuern, wobei eventuell durch Probegüsse definierte Werte genutzt werden können.

Die Erfindung schließt nicht aus, dass die progressive Vergrößerung des Formvolumens durch Zurückziehen von mindestens einem eintauchenden Element, dessen Querschnitt nur einen Teil des Querschnittes des zu fertigenden Gegenstandes einnimmt, erfolgt. Im Falle mehrerer eintauchender Elemente wird die Summe der Querschnitte dieser, kleiner als der Querschnitt des zu fertigenden Gegenstandes sein. Natürlich kann es auch in diesem Fall vorteilhaft sein, dass jener Formteil bewegt wird welcher den Einspritzkanal trägt, während das eintauchende oder die eintauchenden Elemente stillstehen. In bestimmten Fällen kann es vorteilhaft sein dass, je nach Eigenschaften des thermoplastischen Werkstoffes, der Treibmittel und je nach den zu erreichenden Eigenschaften des zu fertigenden Gegenstandes, in einer ersten Fase, bei vollständig eingetauchten Elementen, die gesamte Masse des thermoplastischen Werkstoffes eingespritzt wird um anschließend die stufenweise Aufschäumung durch progressives Herausziehen der Eintauchelemente zu erreichen und/oder zu steuern. Natürlich kann auch in diesem Fall der bewegliche Teil jener sein der mit dem Einspritzkanal ausgestattet ist. Weiters sieht die Erfindung vor, dass die Wirkung der Treibmittel durch kontrollierte Wärmezufuhr zusammen mit einer progressiven Vergrößerung des Formvolumens mittels, an der Form vorgesehenen, beweglichen Teilen stattfindet.

Die Erfindung sieht überdies vor, dass die Wirkung der Treibmittel durch kontrollierte Zuführung von Wärme zusammen mit progressivem Vergrößern des Formhohlraumes durch, an der Form vorgesehene, bewegliche Teile, erfolgt und gesteuert wird.

Es ist bekannt, dass die Wirkung der Treibmittel dadurch beeinflusst, begrenzt und eventuell unterbunden werden kann, dass der thermoplastische mit Treibstoffen versehene Werkstoff im Inneren der Form, bis zur Abkühlung auf eine bestimmte Temperatur, einem bestimmten Druck ausgesetzt wird. Die Werte des Druckes und der Temperatur um dies zu erreichen hängen natürlich von den Eigenschaften des thermoplastischen Werkstoffes und/oder von jenen der Treibmittel ab. Der Werkstoff welcher während des Gusses diese Behandlung erfahren hat behält die Treibeigenschaft der enthaltenen Treibmittel bei und diese kann durch Wärmezufuhr in Abwesenheit von Druck reaktiviert werden. Die Erfindung schlägt also die Schaffung von Bereichen mit aufgeschäumtem Material, durch Einspritzen in einen Formhohlraum welcher geeignet ist einen bestimmten Druck bis zur Abkühlung auf eine bestimmte Temperatur zu halten, vor um z.B. ein Halbfabrikat herzustellen bei welchem gewisse Bereiche bereits die definitive Form und

Konsistenz einnehmen während andere Bereiche vorbereitet sind um nachträglich, innerhalb einer zweiten Form, einer Wärmebehandlung ausgesetzt zu werden um in vorbestimmten Bereichen die, durch einen beweglichen Teil der Form kontrollierte, Aufschäumung zu reaktivieren.

Gemäß einer weiteren Ausführung der Erfindung kann das vorgenannte Verfahren, welches die nachträgliche Ausformung von Bereichen des Gegenstandes durch Reaktivieren der Treibmittel und durch Steuern des Aufschäumens und durch Eindämmen der Schaummasse mittels beweglicher Formteile ermöglicht, auch innerhalb einer einzigen Form durchgeführt werden welche, für die durch Wärmezufuhr behandelten Bereiche, mit beweglichen Teilen ausgestattet ist.

Das erfindungsgemäße Verfahren ermöglicht, gemäß den vorgenannten Varianten, nicht nur die Schaffung von homogen aufgeschäumten und gleichmäßig im Innern des Gegenstandes bis unter die kompakte umhüllende Außenschicht ausgedehnte Strukturen, sondern auch die Schaffung von vorbestimmten Außenbereichen welche, in Bezug auf die restlichen Bereiche des selben Gegenstandes, andere Eigenschaften betreffend die Dichte, die Elastizität und die Verformbarkeit, aufweisen.

Die Erfindung wird nachfolgend anhand einiger vorzuziehender Ausführungsbeispiele von, unter Anwendung des erfindungsgemäßen Verfahrens hergestellten Gegenständen aus, mit Treibmitteln versetztem, thermoplastischem Werkstoff, näher erklärt.

Die Fig. 1, 1a, 1b zeigen schematisch die drei Grundfasen der Herstellung eines zylindrischen Flaschenstopfens aus aufgeschäumtem thermoplastischem Werkstoff, wobei während des Einspritzens jener Formenteil zurückgezogen wird, der mit dem Einspritzkanal versehen ist.

Die Fig. 2, 2a zeigen schematisch die zwei Grundfasen der Herstellung eines Gegenstandes aus thermoplastischem Werkstoff welcher im Innern einer Form aufgeschäumt wird welche zwei eintauchende zurückziehbare Elemente aufweist um eine stufenweise Vergrößerung des Formhohlraumes zu erreichen.

Die Fig. 3, 3b, 3c zeigen schematisch die drei Grundfasen der Herstellung eines Gegenstandes mit Bereichen welche für eine nachträgliche Wärmebehandlung innerhalb einer zweiten Form vorbestimmt sind.

Die Fig. 3a zeigt den Querschnitt durch einen Gegenstand welcher im Spritzgussverfahren in einer in Fig. 3 dargestellten Form hergestellt worden ist und für eine nachfolgende Bearbeitung mittels Wärmezufuhr zwecks Aufschäumung in einem vorbestimmten Bereich, innerhalb einer zweiten spezifischen, in den Fig. 3b, 3c dargestellten Form, bestimmt ist.

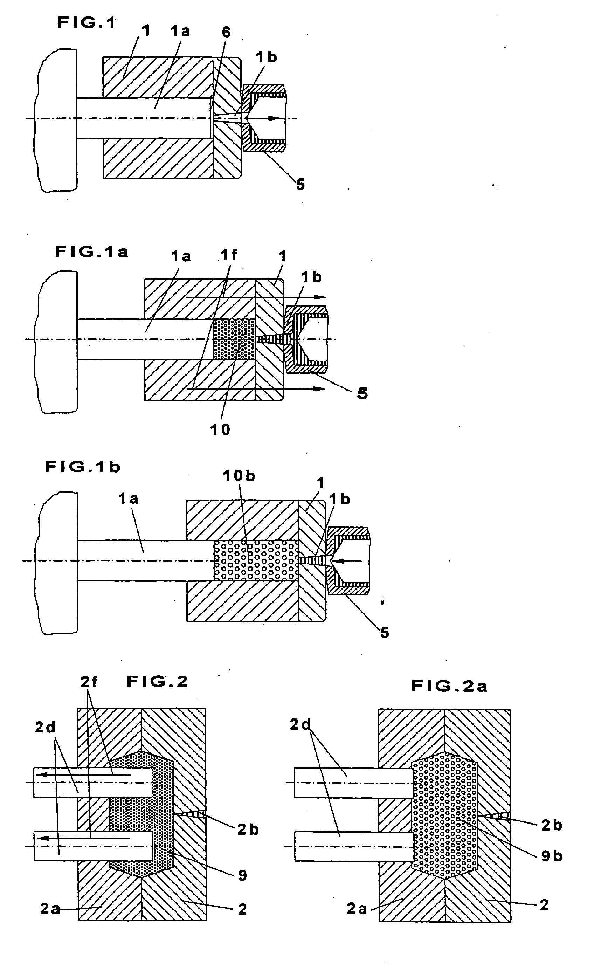

Die Fig. 4, 4a zeigen schematisch die zwei Grundfasen der Herstellung eines Gegenstandes welcher zwei nebeneinander angeordnete Bereiche aufweist welche nachträglich durch Wärmebehandlung, innerhalb der selben Spritzgussform, aufgeschäumt werden.
- Eine Form für die Herstellung von Flaschenstopfen 10a oder von Gegenständen welche wesentlich konstanten Querschnitt über die gesamte Längserstreckung aufweisen, durch Spritzguss von mit Treibmitteln versetztem thermoplastischem Werkstoff, besteht aus einer Hülse 1 welche an der Stirnfläche einen Einspritzkanal 1b aufweist während an der gegenüberliegenden Seite ein Kolben 1a vorgesehen ist, längs welchem der Teil 1 der Form, samt Einspritzkanal 1b und
   Injektor 5, verschiebbar 1f ist um progressiv und steuerbar, während des Einspritzens des eingespritzten Werkstoffes, das Volumen des Formhohlraumes von einem anfänglichen Volumen 6 (Fig. 1) zu einem Volumen 10b (Fig. 1b), zu vergrößern. Erfindungsgemäß ist es wesentlich, dass in diesem Fall der Herstellung von Gegenständen welche wesentlich konstanten Querschnitt über ihre gesamte Längserstreckung aufweisen und der beachtenswerten Änderung des Formvolumens, sich der mit Einspritzkanal 1b versehene Teil 1 der Form bewegt, wodurch erreicht wird dass der Fluss des eingespritzten Werkstoffes nicht auf den vorher eingespritzten, bereits expandierenden, Werkstoff auftrifft oder diesen zu stark durchmischt. Dadurch dass bei Beginn des Einspritzens das anfängliche Formvolumen 6 äußerst klein ist, werden am entsprechenden Bereich des Gegenstandes sich keine Flusslinien bilden welche für ein Spritzgießen im Freistrahl typisch wären. Besagte Merkmale und vor allem die gesteuerte Vergrößerung des Formvolumens ermöglichen eine graduelle, regelmäßige und ungestörte Wirkung der Treibmittel um eine homogen aufgeschäumte Innenstruktur, bis zur relativ dünnen umhüllenden Außenschicht aus kompakterem Werkstoff, welche durch den unmittelbaren Kontakt mit den gekühlten Innenflächen des Formhohlraumes entsteht, zu erhalten. Die Erfindung schließt nicht aus dass, zusammen mit der Bewegung 1f des Teiles 1 der Form, gleichzeitig auch der Kolben 1a bewegt wird, sowie auch ausschließlich der Kolbens 1a, bewegt wird.
- Erfindungsgemäß, insbesondere im Falle von Gegenständen mit komplexer und/oder verzweigter Form in welchem das progressive Vergrößern des Formvolumens nicht den gesamten Querschnitt des zu fertigenden Gegenstandes betrifft, kann mindestens ein zurückziehbarer 2f Tauchkolben 2d an mindestens einem der Formteile 2, 2a vorgesehen sein. In Fig. 2 ist eine Form gezeigt welche aus einem Teil 2 mit Einspritzkanal und einem Teil 2a mit zwei Tauchkolben 2d in, in den mit thermoplastischen, eventuell teilweise aufgeschäumten, Werkstoff 9 vollständig gefüllten Formhohlraum, eingetauchter Stellung. Das Vergrößern des Formhohlraumes durch Zurückziehen 2f der Tauchkolben 2d kann erfindungsgemäß während des Einspritzens erfolgen und gleichzeitig mit Einspritzende, mit den Enden der Kolben 2f in einer Position welche zusammen mit den Innenwänden der Form die Außenform des gefertigten Gegenstandes 9b definiert, enden; teilweise während des Einspritzens und teilweise nach dem Ende des Einspritzens erfolgen oder ausschließlich nach dem Ende des Einspritzens erfolgen. In allen oben erwähnten Fällen besteht die Kontrolle des Aufschäumens des eingespritzten Werkstoffes welches ab dem Austritt des Werkstoffes aus der Injektordüse beginnt unter der Bedingung, dass im Formhohlraum nicht ein Druck oder /und eine Temperatur herrscht welche die Wirkung der Treibmittel verhindert. Auch in diesem Fall ist es, z.B. für bestimmte Werkstoffe, möglich dass es vorteilhaft ist jenen Teil 2 der Form zu bewegen welcher mit dem Injektionskanal 2b ausgestattet ist. Natürlich sieht das erfindungsgemäße Verfahren für diese praktische Lösung vor, dass die Tauchkolben 2d auch oder ausschließlich an jenem Teil 2 der Form vorgesehen sind welcher den Injektionskanal 2b aufweist oder dass die Tauchkolben gemäß quer zur Ausrichtung des Injektionskanales 2b liegenden Achsen angeordnet und rückziehbar sind. Es wird weiters nicht der Einsatz eines Kolbens ausgeschlossen welcher nicht eingetaucht wird und welcher den gesamten Querschnitt eines Teiles des zu fertigenden Gegenstandes einnimmt während die Hohlräume für die Ausformung anderer Bereiche des selben Gegenstandes mit Tauchkolben ausgestattet sind. Natürlich kann auch die Rückzugbewegung, betreffend die Zeiten und die Hübe, abgestimmt und synchron oder unterschiedlich verlaufen.
- Das erfindungsgemäße Verfahren umfasst weiters das Verändern des Volumens bei Aufschäumen des thermoplastischen Werkstoffes durch Wärmeeinwirkung nach dem Einspritzprozess.

Es ist bekannt, dass die Wirkung der, dem thermoplastischen in eine Form eingespritzten Werkstoff, zugesetzten Treibmittel, unterbunden oder kontrolliert werden kann indem die eingespritzte Masse einem bestimmten Druck und/oder Temperatur ausgesetzt wird; es ist weiters bekannt, dass die auf diese Weise unterbundene oder begrenzte Wirkung der Treibmittel durch Wärmeeinwirkung bei Druckverhältnissen unter dem Druck-Grenzwert reaktiviert werden kann.

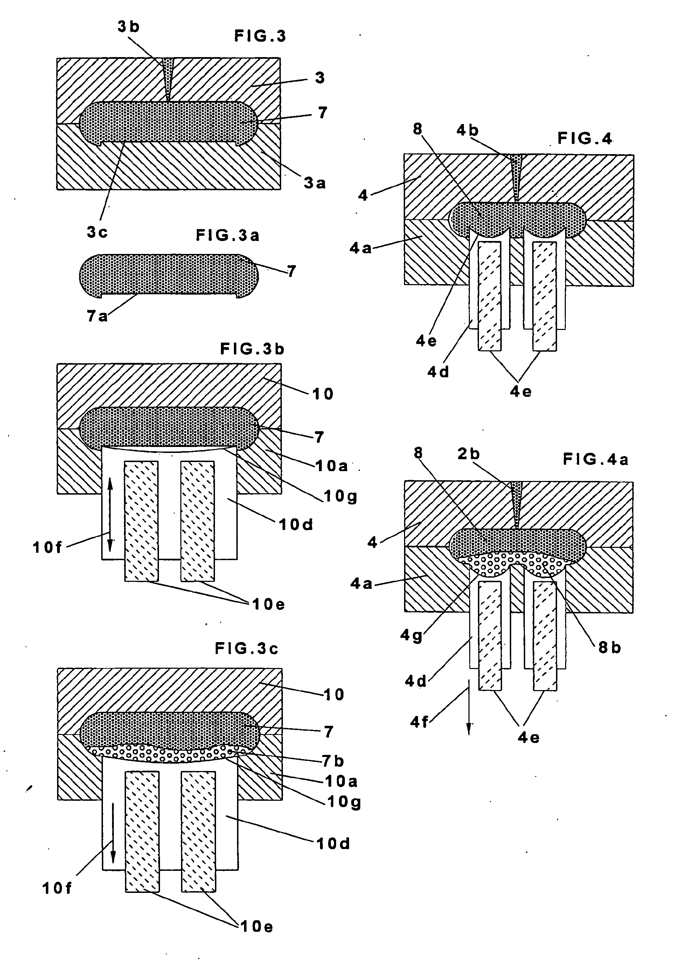

Das erfindungsgemäße Verfahren sieht vor, dass die in einer ersten Fase im Spritzgussverfahren, unter mindestens teilweiser Unterbindung der Wirkung der Treibmittel, hergestellten Gegenstände 7, 8, in einer zweiten Fase eine weitere Ausformung durch Aufschäumung, durch gezielte Wärmeeinwirkung mit Steuerung der Reaktivierung der Wirkung der Treibmittel, erfahren. In der Praxis ist die Herstellung eines Halbfabrikates 7 (Fig. 3a) mittels spezifischer Form (Fig. 3) möglich, wobei nachfolgend, innerhalb einer zweiten Form (Fig. 3b, 3c) eine, infolge gezielter Wärmeeinwirkung reaktivierte Wirkung der Treibmittel ausgelöste Aufschäumung, erfolgt. Erfindungsgemäß ist es aber auch möglich beide Fasen der Formgebung mittels einer einzigen Form (Fig. 4, 4a) durchzuführen.

Diese Technik eignet sich um Bereiche mit kleinerer Dichte 7b, 8b (aufgeschäumt), im Vergleich zu den restlichen Bereichen (kompakter oder weniger aufgeschäumt) des Gegenstandes, zu erhalten. Am Halbfabrikat 7 können die Bereiche 7a welche einer nachfolgenden Wärmebehandlung und somit einer nachfolgenden Aufschäumung unterzogen werden vorher bestimmt werden um dadurch eine genauere Begrenzung und/oder Bestimmung der Aufschäumung zu erreichen.

In eine Form welche aus einem mit Einspritzkanal 3b versehenem Teil 3 und einem Teil 3a besteht, wird ein thermoplastischer Werkstoff eingespritzt welcher mit Treibmitteln versetzt ist welche, wegen der Präsenz eines bestimmten Druckes im Formhohlraum (Dichtheit der Form) und wegen der Kühlung, nicht wirken oder nur teilweise wirken; der Teil 3a weist eine Ausformung 3c (Fig. 3) auf um am Halbfabrikat 7, im Bereich der nachfolgenden Aufschäumung, eine Ausschmiegung oder Aushöhlung 7a (Fig. 3a) zu erhalten. Das im Spritzgussverfahren hergestellte Halbfabrikat 7 wird anschließend in eine zweite Form (Fig. 3b) eingebracht welche aus einem Teil 10 ohne Einspritzkanal und aus einem Teil 10a welcher mit einem zurückziehbaren Element 10d ausgestattet ist welches mindestens ein Heizelement 10e aufweist, ausgestattet ist. Während einer ersten Fase der Beheizung mittels, im rückziehbaren Element 10d vorgesehenen, Heizelementen 10e, ragt das ausgeformte Ende des zurückziehbaren Elementes 10d in die entsprechende Ausschmiegung 7a am Halbfabrikat 7. Anschließend, nach erfolgter Auslösung der Aufschäumung durch Reaktivieren der in der Masse vorhandenen Treibmittel, wird das Element 10d graduell zurückgezogen bis es die Endposition einnimmt welche die definitive Ausformung des aufgeschäumten Bereiches 7b des Gegenstandes bestimmt; nach Erreichen dieser Position kann die Kühlfase mit folgendem Auswurf des gefertigten Gegenstandes beginnen.

Die Erfindung schließt nicht aus dass, beispielsweise für nachträglich aufgeschäumte Bereiche bescheidner Ausdehnung oder kleiner Stärke, Formen eingesetzt werden in welchen die nachträgliche Aufschäumung innerhalb von Hohlräumen erfolgt welche in ihrem Volumen nicht veränderbar sind und innerhalb des unveränderbaren Hohlraumes der zweiten Form in welchen das Halbfabrikat eingelegt wird vorgesehen sind; in diesem Fall sind die Heizelemente 10e direkt in der Form 10, 10a, an den, diesen Hohlräumen entsprechenden Stellen, vorgesehen. Um die Heizleistung zu erhöhen und um den Bereich der auszulösenden Aufschäumung zu definieren, sind jene Teile der Form welche die Hohlräume für die nachfolgende Aufschäumung aufweisen, thermisch von der Masse der Form unter Vermeidung von Wärmebrücken getrennt.

Das selbe Verfahren ist im Wesentlichen auch an einer einzigen Form durchführbar (Fig. 4, 4a) welche aus einem, mit Einspritzkanal versehenen Teil 4 und einem, mit mindestens einem rückziehbaren, mit Heizelement 4e ausgestatteten, Element 4d versehenen Teil 4a, besteht. Während der Einspritzfase und einer eventuellen teilweisen Aufschäumung des mit Treibmitteln versetzten thermoplastischen Werkstoffes befindet sich das Element 4d oder befinden sich die zurückziehbaren Elemente 4d in eingetauchter Position indem sie teilweise in den Formhohlraum (Fig. 4) ragen.

Die Erfindung schließt immerhin nicht aus, dass in dieser Einspritzfase die Elemente 4d die Funktion von Kolben übernehmen welche bereits in Zusammenhang mit den Darstellungen Fig. 2, 2a beschrieben worden sind. Das Einspritzen in den Formhohlraum muss immerhin derart erfolgen, dass das Aufschäumen des Werkstoffes durch die Treibmittel nicht stattfindet oder nur teilweise stattfindet um mindestens einen Teil des Aufschäumpotentials durch die nachträgliche Wärmeeinwirkung auszulösen. Nach der Abkühlung und somit der Erstarrung des Halbfabrikates 8 findet die Wärmezuführung mittels, in den zurückziehbaren Elementen 4d vorgesehenen, Heizelementen 4e statt. Bei begonnenem Aufschäumungsprozess, ausgelöst durch gezielte und auf den durch die Position der Elemente 4d vorbestimmten Bereich begrenzte Wärmezufuhr reaktivierte Wirkung der Treibmittel, beginnt das progressive Zurückziehen 4f der Elemente 4d bis in die Endposition welche von der, durch die Ausformung 4g der Enden der Elemente 4d bestimmten Form des aufgeschäumten Bereiches 8b, definiert wird. Durch das graduelle und gesteuerte Zurückziehen 4f der Elemente 4d bildet sich der aufgeschäumte Bereich 8b sehr homogen aus, weiters besteht die Möglichkeit, durch Verlangsamen der Rückziehbewegung und/oder durch Verändern der Wärmezufuhr, die Dichte der Schaumstruktur 8b und das Vordringen dieser in die Masse 8 mit unterbundener Aufschäumung zu verändern.

Natürlich können die zurückziehbaren Elemente 4d, 10d, gemäß Achsen unterschiedlicher Anordnung in Bezug auf die Richtung der Einspritzung, angeordnet und zurückgezogen 4f, 10f werden.

Die Erfindung schließt die Möglichkeit mit ein dass, was die Behandlungen betrifft um eine sukzessive Aufschäumung vorbestimmter Bereiche am Werkstück zu erhalten, auch Treibmittel eingesetzt werden können welche bei Spritztemperatur nicht wirken und erst nachfolgend durch gezielte Wärmezuführung bei Temperaturen, welche höher als die Einspritztemperatur sind, aktiviert werden um die Aufschäumung der Treibmittel auszulösen.

Die Bewegungen 1f, 2f, 4f, 10f welche das Vergrößern des Volumens des Formhohlraumes, bzw. des Hohlraumes für die nachfolgende Aufschäumung, bewirken, können aufgrund empirischer Werte oder sich aus durchgeführten Proben ergebenden Werten und/oder in direktem Bezug zum Fluss des eingespritzten Werkstoffes, ausgeführt werden; es wird jedoch nicht ausgeschlossen dass die besagten Vergrößerungen des Volumens und somit die besagten Rückzugbewegungen aufgrund von, durch Sonden zum Messen des Druckes und/oder der Temperatur im Innern des Formhohlraumes, erfassten Parametern bestimmt werden.

Es wird weiters nicht ausgeschlossen, dass die Kolben 1a, die Tauchkolben 2d und die zurückziehbaren Elemente 4d, 10d aus einem Element oder aus mehreren Elementen bestehen welche gemeinsam oder einzeln bewegt werden können. Das erfindungsgemäße Verfahren ist auch bei Einspritzung über mehr als eine Düse anwendbar.

## Patentansprüche

1. Spritzgussverfahren für, mit Treibmitteln versehenem, thermoplastischen Werkstoff (7, 8, 9, 10) gemäß Einkomponentenspritzsystem mit Einspritzung über einen oder über mehrere Einspritzkanäle (1 b, 2b, 3b, 4b) zwecks Beeinflussung der Strukturausbildung des aufgeschäumten Werkstoffes im gesamten oder in einem Teil des Volumens des zu fertigenden Gegenstandes eine Vergrößerung des Volumens des Formhohlraumes erfolgt, welche aufgrund des im Formhohlraum herrschenden Druckes und/oder der Temperatur und/oder in Abhängigkeit des Materialflusses während der Einspritzfase, während der folgenden Aufschäumfase des eingespritzten Materials oder während beider Fasen gesteuert wird, dass die Vergrößerung des Volumens des Formhohlraumes sich mindestens über einen Teil einer oder beider Fasen erstreckt, dass die Einspritzfase unter zumindest teilweiser Verhinderung des Aufschäumens des thermoplastischen Werkstoffes innerhalb des selben Formhohlraumes erfolgt, dass nach Abkühlung welche die Wirkung der Treibmittel unterbindet, in der selben Form (4, 4a) oder innerhalb einer zweiten Form (10, 10a) **dadurch gekennzeichnet, dass** mindestens an einem Oberflächenbereich des Halbfabrikates (8, 7) eine Wärmezufuhr erfolgt um die Wirkung der Treibmittel zu reaktivieren wobei gleichzeitig oder anschließend eine Vergrößerung des Formhohlraumes mittels Rückziehen (4f, 10f) beweglicher Elemente (4d, 10d) erfolgt welche in maximaler Rückzugposition die Außenform des aufgeschäumten oder des mehr aufgeschäumten Bereiches (8b) des gefertigten Gegenstandes definieren.

2. Spritzgussverfahren gemäß Ansprüch1, **dadurch gekennzeichnet, dass** das Halbfabrikat (7) welches durch Spritzgießen mit vollständigem oder teilweisem Unterbinden der Wirkung der Treibmittel hergestellt worden ist, einer zweiten Bearbeitung innerhalb einer Form unterzogen wird welche an jenen Stellen welche den Bereichen des Halbfabrikates entsprechen welche einer Wärmezufuhr zwecks Aufschäumung unterzogen werden, Ausdehnungshohlräume aufweist welche mit Heizelementen versehen sind um ein Aufschäumen des Werkstoffes ohne Steuerung der Volumenvergrößerung bis zum vollständigen Ausfüllen besagter Hohlräume zu erreichen.

3. Spritzgussverfahren gemäß Anspruch 1, **dadurch gekennzeichnet, dass** im Falle der Herstellung von Gegenständen (10b) welche gleichbleibenden oder beinahe gleichbleibenden Querschnitt über ihre gesamte Längserstreckung aufweisen und im Falle von bemerkenswerten Änderungen des Volumens des Formhohlraumes, ausgehend von einem minimalen Anfangsvolumen (6) zwecks Verhinderung der Auswirkungen einer Freistrahleinspritzung, eine Form benützt wird welche aus einem hülsenförmigen Teil (1) mit mindestens einem Einspritzkanal (1b) besteht welcher zusammen mit dem Injektor (5) beweglich (1f) ist, während der zweite Teil (1a) aus einem Kolben besteht welcher während der Vergrößerung des Volumens des Formhohlraumes feststeht.

4. Spritzgussverfahren gemäß den Ansprüchen 1 und 3, **dadurch gekennzeichnet, dass** um die Vergrößerung des Volumens des Formhohlraumes zu erreichen, sei es der hülsenförmige Formteil (1) als auch der kolbenförmige Formteil (1a) progressiv bewegt wird, dass nur der kolbenförmige Teil (1a) progressiv bewegt wird und dass der Einspritzkanal am kolbenförmigen Teil (1a) vorgesehen sein kann.

5. Spritzgussverfahren gemäß Anspruch 1, **dadurch gekennzeichnet, dass** die Veränderung des Volumens des Formhohlraumes durch die Wirkung von eintauchenden Kolben oder Elementen (2d) erfolgt welche an mindestens einem der Formteile (2, 2a) vorgesehen sind, in den Formhohlraum ragen und gegenüber der Form so beweglich sind dass das Zurückziehen (2d) aus dem Formhohlraum erreicht wird indem sie bei feststehender Form bewegt werden oder indem die Form (2, 2a), bei feststehenden eintauchenden Kolben oder Elementen (2d), bewegt wird.

6. Spritzgussverfahren gemäß den Ansprüchen 1, oder 2, **dadurch gekennzeichnet, dass** während des Einspritzens zumindest teilweise die Wirkung der Treibmittel, bis zur Abkühlung auf eine Temperatur bei welcher die Aufschäumwirkung blockiert ist, unterbunden wird um anschließend mindestens einen Teil der Oberfläche des hergestellten Halbfabrikates (7, 8) innerhalb der selben Form oder innerhalb einer spezifischen Form (3, 3a) einer Wärmezuführung, zwecks Reaktivierung der Wirkung der Treibmittel, ausgesetzt zu werden um die Aufschäumung in Hohlräumen mit anpassbarem oder unveränderbarem Volumen zu erreichen.

7. Spritzgussverfahren gemäß den Ansprüchen 1, und 5, **dadurch gekennzeichnet, dass** die selben beweglichen Elemente (4d) um die Anpassung des Formhohlraumes zwecks nachträglicher Aufschäumung mittels Reaktivierung der Treibmittel zu erhalten, während der vorausgehenden Einspritzfase als Eintauchelemente, zwecks Veränderung des Volumens des Formhohlraumes, genutzt werden können.

8. Spritzgussverfahren gemäß den Ansprüchen 1, und 2, **dadurch gekennzeichnet, dass** die Veränderungen des Volumens während des Einspritzens und/oder des Aufschäumens, bzw. während des nachfolgenden Aufschäumens durch Reaktivieren der Treibmittel, aufgrund von Druck- und/oder Temperaturparameter erfolgen welche im Formhohlraum, bzw. im Hohlraum der nachfolgenden Aufschäumung erhoben werden und dass besagte Veränderungen des Volumens des Formhohlraumes auch in Abhängigkeit des Flusses des eingespritzten Werkstoffes stattfinden können.

## Claims

1. Method for the injection moulding of thermoplastic material (7, 8, 9, 10) provided with foaming agents by the one-component injection-moulding system with injection via one or more injection channels (1b, 2b, 3b, 4b), wherein an enlargement of the volume of the mould cavity takes place for the purpose of influencing the formation of the structure of the foamed material in all or part of the volume of the article to be produced and is controlled on the basis of the pressure and/or temperature prevailing in the mould cavity and or in dependence on the material flow during the injection phase, during the following foaming phase of the injected material or during both phases, wherein the enlargement of the volume of the mould cavity extends at least over part of one or both phases and wherein the injection phase takes place with at least partial prevention of the foaming of the thermoplastic material within the same mould cavity, **characterized in that**, after cooling that prevents the foaming agents from having an effect, heat is supplied in the same mould (4, 4a) or within a second mould (10, 10a), at least on a surface region of the semifinished products (8, 7), in order to reactivate the effect of the foaming agents, wherein an enlargement of the mould cavity takes place simultaneously or subsequently by means of retracting (4f, 10f) movable elements (4d, 10d) which, in the maximum retracted position, define the outer shape of the foamed or more foamed region (8b) of the finished article.

2. Injection moulding method according to Claim 1, **characterized in that** the semifinished product (7) that has been produced by injection moulding with complete or partial prevention of the effect of the foaming agents is subjected to a second processing within a mould which has, at those locations corresponding to the regions of the semifinished product which are subjected to a heat supply for the purpose of foaming, expansion cavities that are provided with heating elements to achieve foaming of the material without controlling the volume enlargement until said cavities are filled completely.

3. Injection moulding method according to Claim 1, **characterized in that**, in the case of the production of articles (10b) that have a constant or almost constant cross section over their entire longitudinal extent and in the case of notable changes of the volume of the mould cavity, starting from a minimal initial volume (6), for the purpose of preventing the effects of injection by free jetting, the mould used is one which comprises a sleeve-shaped part (1), with at least one injection channel (1b) that is movable (1f) together with the injector (5), while the second part (1a) comprises a piston that is fixed during the enlargement of the volume of the mould cavity.

4. Injection moulding method according to Claims 1 and 3, **characterized in that**, to achieve the enlargement of the volume of the mould cavity, either the sleeve-shaped mould part (1) and the piston-shaped mould part (1a) are progressively moved or only the piston-shaped part (1a) is progressively moved and **in that** the injection channel may be provided on the piston-shaped part (1a).

5. Injection moulding method according to Claim 1, **characterized in that** the change of the volume of the mould cavity takes place by the effect of plunging pistons or elements (2d) that are provided on at least one of the mould parts (2, 2a), protrude into the mould cavity and are movable with respect to the mould in such a way that the retraction (2d) from the mould cavity is achieved by said pistons or elements being moved while the mould is fixed or by the mould (2, 2a) being moved while the plunging pistons or elements (2d) are fixed.

6. Injection moulding method according to Claim 1 or 2, **characterized in that**, during the injection, the effect of the foaming agents is at least partially prevented until cooling occurs to a temperature at which the foaming effect is inhibited, in order for at least part of the surface of the produced semifinished product (7, 8) to be subsequently subjected to a supply of heat within the same mould or within a specific mould (3, 3a), for the purpose of reactivating the effect of the foaming agents, in order to achieve the foaming in the cavities with an adaptable or unchangeable volume.

7. Injection moulding method according to Claims 1 and 5, **characterized in that** the same movable elements (4d) for obtaining the adaptation of the mould cavity for the purpose of subsequent foaming by means of reactivation of the foaming agents can be used as plunging elements during the preceding injection phase, for the purpose of changing the volume of the mould cavity.

8. Injection moulding method according to Claims 1 and 2, **characterized in that** the changes of the volume during the injection and/or foaming, or during the subsequent foaming by reactivation of the foaming agents, take place on the basis of pressure and/or temperature parameters that are raised in the mould cavity, or in the cavity of the subsequent foaming, and **in that** said changes of the volume of the mould cavity may also take place in dependence on the flow of the injected material.

## Revendications

1. Procédé pour le moulage par injection de matériau (7, 8, 9, 10) thermoplastique avec des agents moussants, selon un système d'injection monocomposant avec injection par un ou plusieurs canaux d'injection (1b, 2b, 3b, 4b), où, dans le but d'influer sur la configuration de structure du matériau moussé, dans la totalité ou dans une partie du volume de l'objet à fabriquer, un grossissement du volume de l'espace creux de moulage est effectué, grossissement qui est commandé, du fait de la pression et/ou de la température régnant dans l'espace creux de moulage et/ou en fonction du flux de matériau pendant la phase d'injection, pendant la phase de moussage subséquente du matériau injecté, ou pendant les deux phases, où le grossissement du volume de l'espace creux de moulage s'étend sur au moins une partie d'une ou des deux phases, où la phase d'injection s'effectue tout en empêchant au moins partiellement le moussage du matériau thermoplastique à l'intérieur du même espace creux de moulage, après refroidissement, qui stoppe l'effet des agents moussants, dans le même moule (4, 4a) ou à l'intérieur d'un deuxième moule (10, 10a), **caractérisé en ce qu'**un apport de chaleur est effectué au moins sur une zone de surface du produit semi-fini (8, 7), afin de réactiver l'effet des agents moussants, où, simultanément ou subséquemment, un grossissement de l'espace creux de moulage est effectué, par rétraction (4f, 10f) d'éléments (4d, 10d) mobiles, qui, à leur position de rétraction maximale, définissent la forme extérieure de la zone (8b) moussée, ou plus fortement moussée, de l'objet fabriqué.

2. Procédé pour le moulage par injection selon la revendication 1, **caractérisé en ce que** le produit semi-fini (7), ayant été fabriqué par moulage par injection avec cessation, complète ou partielle, de l'effet des agents moussants, est soumis à un deuxième usinage dans un moule, qui, aux emplacements qui correspondent aux zones du produit semi-fini qui sont soumises à un apport de chaleur dans le but d'un moussage, présente des espaces creux pour dilatation, munies d'éléments chauffants, de manière à obtenir un moussage du matériau, allant jusqu'au remplissage complet desdits espaces creux, sans aucune commande du grossissement de volume.

3. Procédé pour le moulage par injection selon la revendication 1, **caractérisé en ce que**, dans le cas de fabrication d'objets (10b) présentant une section transversale restant constante ou proche de rester constante, sur la totalité de leur étendue longitudinale, et dans le cas de modifications remarquables du volume de l'espace creux de moulage, en partant d'un volume initial (6) minimal, dans le but d'empêcher les effets d'une injection par jet libre, est utilisé un moule composé d'une partie (1) en forme de douille, avec au moins un canal d'injection (1b), mobile (1f) conjointement avec l'injecteur (5), tandis que la deuxième partie (1a) est composée d'un piston qui est stationnaire pendant le grossissement du volume de l'espace creux de moulage.

4. Procédé selon les revendications 1 et 3, **caractérisé en ce que**, pour obtenir le grossissement du volume de l'espace creux de moulage, la partie de moule (1) en forme de douille, ainsi qu'également la partie de moule (1a) en forme de piston, sont déplacées progressivement, et **en ce que** le canal d'injection peut être prévu sur la partie de moule (1a) en forme de piston.

5. Procédé pour le moulage par injection selon la revendication 1, **caractérisé en ce que** la modification du volume de l'espace creux de moulage est effectuée grâce à l'effet de pistons ou d'éléments (2d) plongeants, prévus sur au moins l'une des parties de moule (2, 2a), pénétrant dans l'espace creux de moulage et mobiles, par rapport au moule, de manière que la rétraction (2d) hors de l'espace creux de moulage soit atteinte par le fait qu'ils sont déplacés alors que le moule est stationnaire, ou par le fait que le moule (2, 2a) est déplacé, alors que les pistons ou éléments (2d) plongeants sont stationnaires.

6. Procédé pour le moulage par injection selon la revendication 1 ou 2, **caractérisé en ce que**, pendant l'injection, l'effet des agents moussants est au moins partiellement stoppé jusqu'à refroidissement à une température pour laquelle l'effet moussant est bloqué, pour ensuite exposer au moins une partie de la surface du produit semi-fini (7, 8) fabriqué, se trouvant à l'intérieur du même moule, ou à l'intérieur d'un moule (3, 3a) spécifique, à un apport de chaleur, afin de réactiver l'effet des agents moussants, pour obtenir le moussage dans des espaces creux ayant des volumes adaptables ou non modifiables.

7. Procédé selon les revendications 1 et 5, **caractérisé en ce que** les mêmes éléments (4d) mobiles, pour obtenir l'adaptation de l'espace creux de moulage dans un but de moussage après-coup, par une réactivation des agents moussants, peuvent être utilisés pendant la phase d'injection précédente en tant qu'éléments plongeants, à des fins de modification du volume de l'espace creux de moulage.

8. Procédé selon les revendications 1 et 2, **caractérisé en ce que** les modifications du volume s'effectuent pendant l'injection et/ou le moussage, ou pendant le moussage subséquent, par réactivation des agents moussants, du fait de paramètres de pression et/ou de température, perçus dans l'espace creux de moulage, ou dans l'espace creux du moussage subséquent, et **en ce que** lesdites modifications du volume de l'espace creux de moulage peuvent s'effectuer également en fonction du flux du matériau injecté.
